# EUROPÄISCHE PATENTANMELDUNG

(11) **EP 4 678 419 A1**
(43) Veröffentlichungstag der Anmeldung: **14.01.2026**
(21) Anmeldenummer: 25183749.8
(22) Anmeldetag: 18.06.2025
(51) Int. Cl.: B60C 11/03, B60C 11/13

(54) **FAHRZEUGREIFEN**

(30) Priorität: 11.07.2024 DE 102024206574
(71) Anmelder: Continental Reifen Deutschland GmbH, 30175 Hannover (DE)
(72) Erfinder: Herbst, Stephan, 30175 Hannover (DE); Rittweger, Stefan, 30175 Hannover (DE); Brockmann, Jürgen, 30175 Hannover (DE); Heinhaupt, Torsten, 30175 Hannover (DE); Brandau, Christian, 30175 Hannover (DE)
(74) Vertreter: Continental Corporation

(57) **Zusammenfassung**

Die Erfindung betrifft einen Fahrzeugreifen mit einem Laufstreifen mit zumindest einer Profilblockreihe (2') mit Querrillen (6'), welche, in Draufsicht betrachtet, jeweils einen Hauptabschnitt (6₁') und einen an diesen anschließenden in die Umfangsrille (3, 4) einmündenden Randabschnitt (6₂') aufweisen,
wobei in der Querrille (6') ein in Draufsicht über den kompletten Randabschnitt (6₂') reichendes Rillenplateau (10') mit einer gegenüber der Laufstreifenperipherie in radialer Richtung abgesetzten Plateaudeckfläche (10a') und einem von dieser ausgehenden Plateaudurchgang (14') ausgebildet ist,
wobei der Plateaudurchgang (14') einen schmäler als der Randabschnitt (6₂') und der Hauptabschnitt (6₁') ausgeführten Einschnitt (14a') aufweist.

Die Breite (b₁') des Hauptabschnitts (6₁') ist größer ist als die Breite (b₂') des Randabschnitts (6₂'), wobei das Rillenplateau (10') in den Hauptabschnitt (6₁') hineinragt und in diesem über eine zum Rillengrund (9') abfallende Plateaurampenfläche (10b') ausläuft und wobei der Einschnitt (14a') des Plateaudurchgangs (14') einen an der Plateaurampenfläche (10b') keilförmig auslaufenden Einschnittaustritt (14a₂') aufweist.

## Beschreibung

Die Erfindung betrifft einen Fahrzeugreifen mit einem Laufstreifen mit zumindest einer an zumindest einer Seite von einer Umfangsrille begrenzten Profilblockreihe mit einer Reihenmittellinie und Profilblöcken, welche durch in die Umfangsrille einmündende Querrillen voneinander getrennt sind,
wobei jede Querrille eine Breite mit einem an der breitesten Stelle vorliegenden, maximalen Wert von 3,00 mm bis 8,00 mm und eine an der tiefsten Stelle vorliegende, maximale Tiefe von 70% bis 100% der Profiltiefe sowie, in Draufsicht betrachtet, einen Hauptabschnitt und einen an diesen anschließenden in die Umfangsrille einmündenden Randabschnitt aufweist,
wobei der Hauptabschnitt die Reihenmittellinie passiert, eine Breite und einen auf der maximalen Tiefe verlaufenden Rillengrund aufweist,
wobei der Randabschnitt eine von der Breite des Hauptabschnitts abweichende Breite aufweist und
wobei in der Querrille ein in Draufsicht über den kompletten Randabschnitt reichendes Rillenplateau mit einer gegenüber der Laufstreifenperipherie in radialer Richtung abgesetzten Plateaudeckfläche und einem von dieser ausgehenden Plateaudurchgang ausgebildet ist,
wobei der Plateaudurchgang einen zwischen der Umfangsrille und dem Hauptabschnitt verlaufenden, das Rillenplateau durchsetzenden, schmäler als der Randabschnitt und der Hauptabschnitt ausgeführten Einschnitt aufweist.

Ein derartiger Fahrzeugreifen ist beispielsweise aus der DE 10 2020 215 799 A1 bekannt. Dieser Fahrzeugreifen weist einen Laufstreifen mit einer mittigen Profilblockreihe auf, welche durch Querrillen in Profilblöcke gegliedert ist. Die Querrillen weisen eine Breite mit einem maximalen Wert von beispielsweise 3,00 mm und eine maximale Tiefe von 7,00 mm auf, welche bei der vorgesehenen Profiltiefe von 8,0 mm daher zirka 87% der Profiltiefe entspricht. Die Querrillen setzen sich, in Draufsicht betrachtet, aus einem mittleren Hauptabschnitt und zwei in die Umfangsrillen einmündenden Randabschnitten zusammen. Der Hauptabschnitt passiert die Reihenmittellinie, verläuft über den Großteil der in die axiale Richtung projizierten Länge der Querrille und weist eine Breite von beispielsweise 1,5 mm sowie einen auf der maximalen Tiefe verlaufenden Rillengrund auf. Die Randabschnitte weisen eine Breite von 200% der Breite des Hauptabschnitts, welche daher beispielsweise 3,0 mm beträgt, auf, sodass die maximale Breite der Querrillen in den Randabschnitten vorliegt. In jedem Randabschnitt ist ferner ein über diesen reichendes Rillenplateau mit einer gegenüber der Laufstreifenperipherie in radialer Richtung abgesetzten und parallel zur Laufstreifenperipherie verlaufenden Plateaudeckfläche und einem von dieser ausgehenden, zwischen der jeweiligen Umfangsrille und dem Hauptabschnitt verlaufenden, das Rillenplateau durchsetzenden Einschnitt mit einer Breite von beispielsweise 0,5 mm ausgebildet. Der Reifen soll unter Berücksichtigung eines reduzierten Reifenverschleiß eine gute Schnee- und Eisperformance aufweisen.

Bei Fahrzeugreifen der eingangs genannten Art trägt das im Randabschnitt der Querrille befindliche Rillenplateau zu einer Versteifung der Profilrippe im randseitigen Rippenbereich bei, was für die Handlingperformance und im Hinblick auf ein möglichst gleichmäßiges Abriebbild günstig ist. Das Rillenplateau reduziert gleichzeigt die lokale Querschnittsfläche der Querrille, sodass die Entwässerungsperformance der Querrille nachlässt und somit die Aquaplaninggefahr steigt, wobei durch den Plateaudurchgang das Wasserdrainageverhalten der Querrille und damit die Aquaplaningperformance tendenziell wieder etwas verbessert wird.

Der Erfindung liegt die Aufgabe zu Grund, bei einem Fahrzeugreifen der eingangs genannten Art, unter Beibehaltung eines möglichst gleichmäßigen Abriebverhaltens den zwischen der Handlingperformance und der Aquaplaningperformance bestehenden Zielkonflikt auf günstigere Weise, also auf einem "höheren Niveau", als bisher zu lösen.

Gelöst wird die gestellte Aufgabe dadurch, dass die Breite des Hauptabschnitts über dessen komplette in Draufsicht vorliegende Erstreckung größer ist als die Breite des Randabschnitts, wobei das Rillenplateau in den Hauptabschnitt hineinragt und in diesem über eine zum Rillengrund abfallende Plateaurampenfläche ausläuft,
wobei die Plateaurampenfläche, in Draufsicht betrachtet, entlang der Rillenmittellinie langgezogen ist und, im in Draufsicht entlang der Rillenmittellinie ausgerichteten Schnitt betrachtet, relativ zur Laufstreifenperipherie eine größere Neigung aufweist als die Plateaudeckfläche und
wobei der Einschnitt des Plateaudurchgangs, im in Draufsicht entlang der Rillenmittellinie ausgerichteten Schnitt betrachtet, einen an der Plateaurampenfläche keilförmig auslaufenden Einschnittaustritt aufweist.

Der schmäler ausgeführte Randabschnitt sorgt in Kombination mit dem in den Hauptabschnitt hineinragenden Rillenplateau für eine besonderes wirkungsvolle Versteifung der Profilrippe, wobei der diesbezüglich kritisch Profilrippenrandbereich - entsprechend der abfallenden Plateaurampenfläche - etwas stärker versteift wird, wodurch die Handlingperformance verbessert und gleichzeitig die Profilrippensteifigkeit vergleichmäßigt ist, sodass zusätzlich ein gleichmäßiges Abriebverhaltens erhalten bleibt. Der Einschnitt tritt an der langgezogenen Plateaurampenfläche mit einem keilförmig auslaufenden Einschnittaustritt aus, wodurch der Einschnittaustritt gegenüber herkömmlich gestalteten Rillenplateaus in Draufsicht deutlich länger ausfällt und derart ein gutes Entwässerungsverhalten der Querrille im Bereich des Rillenplateaus erhalten bleibt.

Gemäß einer bevorzugten Ausführung verläuft die Plateaudeckfläche, im in Draufsicht entlang der Rillenmittellinie ausgerichteten Schnitt betrachtet, parallel zur Laufstreifenperipherie. Dies trägt zu einer besonders ausgeprägten Versteifung im Profilrippenrandbereich bei und ist somit für die Handlingperformance günstig.

Gemäß einer weiteren bevorzugten Ausführung weist die Plateaudeckfläche zum Niveau der Profiltiefe in radialer Richtung einen als kleinstmöglichen Abstand ermittelten Abstand von 3,00 mm bis 5,00 mm, insbesondere von 3,50 mm bis 4,50 mm, auf. Dies trägt zu einer besonders guten Balance zwischen der Handlingperformance und der Aquaplaningperformance bei.

Für die Versteifung der Profilrippe und somit für die Handlingperformance ist es von zusätzlichem Vorteil, wenn die Breite des Randabschnitts 40% bis 55% des maximalen Werts der Breite des Hauptabschnitts beträgt. Insbesondere trägt diese Maßnahme zu einer besonders günstigen Lösung des zwischen der Handlingperformance und der Aquaplaningperformance bestehenden Zielkonflikts bei.

Ferner ist es vorteilhaft, wenn die Plateaudeckfläche in den Hauptabschnitt hineinverläuft. Dies trägt zu einer weiteren Versteifung der Profilrippe bei und ist daher für die Handlingperformance günstig.

Gemäß einer weiteren bevorzugten Ausführung ist der Plateaudurchgang in radialer Richtung aus dem Einschnitt und einem von der Plateaudeckfläche in radialer Richtung beabstandeten, an den Einschnitt anschließenden und gemeinsam mit diesem zwischen der Umfangsrille und dem Hauptabschnitt verlaufenden, den Einschnitt im Querschnitt beidseitig überragenden Kanal gebildet. Der Kanal steigert das Wasseraufnahmevermögen der Querrille, sodass deren Wasserdrainageverhalten verbessert ist. In der Folge ist die somit auch die Aquaplaningperformance verbessert.

Bei der letztgenannten bevorzugten Ausführung ist gemäß einer vorteilhaften Weiterbildung vorgesehen, dass der Kanal einen Durchmesser von 1,00 mm bis 2,00 mm, insbesondere von 1,30 mm bis 1,80 mm, aufweist.

Für das Entwässerungsverhalten der Querrille im Bereich des Rillenplateaus ist es zudem vorteilhaft, wenn der Einschnitt eine Breite von 0,60 mm bis 0,90 mm, insbesondere von 0,70 mm bis 0,80 mm, aufweist.

Von Vorteil ist es ferner, wenn die Plateaurampenfläche, im in Draufsicht entlang der Rillenmittellinie verlaufenden Schnitt betrachtet, zur radialen Richtung unter einem Winkel von 55° bis 65° verläuft. Dies trägt zu einem effizienten Wassertransport durch die Querrille sowie einer im Hinblick auf das Abriebverhalten günstigen Versteifung der Profilrippe bei.

Bei einer weiteren vorteilhaften Ausführung weist der Randabschnitt, in Draufsicht betrachtet, eine auf die Rillenmittellinie bezogene, in die axiale Richtung projizierte Länge von 15% bis 25% der auf die Rillenmittellinie bezogenen, in die axiale Richtung projizierten Länge der Querrille auf. Der Randabschnitt ist dadurch in seiner Länge derart gewählt, dass er einerseits für eine günstige Versteifung im Profilrippenrandbereich sorgt. In der Folge ist der an diesen anschließende, breitere Hauptabschnitt, welcher die Reihenmittellinie passiert, entsprechend lang ausgeführt, wodurch die Aquaplaningperformance auf besonders hohem Niveau gehalten ist.

In diesem Zusammenhang ist es ferner von günstig, wenn die Querrille, in Draufsicht betrachtet, aus dem Hauptabschnitt und dem Randabschnitt zusammengesetzt ist.

Gemäß einer weiteren bevorzugten Ausführung weist die Rillenmittellinie der Querrille am gegenseitigen Anschluss des Hauptabschnitts an den Randabschnitt einen Knickpunkt auf, wobei der Hauptabschnitt mit dem Randabschnitt einen auf die Rillenmittellinie bezogenen Winkel von 135° bis 165°, insbesondere von 150° bis 160°, einschließt. Die Querrille weist somit verschieden orientierte, als Griffkanten wirkende Rillenkanten auf, was zu einer zusätzlichen Verbesserung der Handlingperformance beiträgt.

Bevorzugt ist es ferner, wenn der Hauptabschnitt, in Draufsicht betrachtet, bezogen auf die Rillenmittellinie der Querrille durchgehend gebogen verläuft und der Randabschnitt, in Draufsicht betrachtet, bezogen auf die Rillenmittellinie der Querrille gerade verläuft.

Für die Handlingperformance ist es von weiterem Vorteil, wenn der Randabschnitt in radialer Richtung eine maximale Tiefe aufweist, welche höchstens der maximalen Tiefe des Hauptabschnitts entspricht und vorzugsweise 0,50 mm bis 2,00 mm kleiner ist als die maximale Tiefe des Hauptabschnitts.

Für die Entwässerungsperformance der Querrille ist es günstig, wenn diese, in Draufsicht betrachtet und bezogen auf eine die Enden der Rillenmittellinie verbindende, gerade Hilfslinie - zur Umfangsrichtung unter einem Winkel von 35° bis 65°, insbesondere von 45° bis 55°, verläuft, wobei der Laufstreifen vorzugsweise laufrichtungsgebunden ausgeführt ist und die Querrille - bezogen auf die Hilfslinie - derart relativ zur axialen Richtung geneigt ist, dass beim Abrollen des Reifens bei Vorwärtsfahrt das im Randabschnitt liegende Ende der Hilfslinie vor dem anderen Ende der Hilfslinie in den Untergrund eintritt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen in die Ebene abgewickelten Umfangsabschnitt eines Laufstreifens eines Fahrzeugreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2,
Fig. 5 einen Schnitt entlang der Linie V-V der Fig. 2,
Fig. 6 einen Schnitt entlang der Linie VI-VI der Fig. 2,
Fig. 7 einen Schnitt entlang der Linie VII-VII der Fig. 2,
Fig. 8 eine Schrägansicht gemäß der in Fig. 2 durch den Pfeil S₈ angedeuteten Sichtrichtung,
Fig. 9 einen perspektivischen Schnitt entlang der Linie IX-IX der Fig. 2,
Fig. 10 einen Schnitt entlang der Linie X-X der Fig. 2,
Fig. 11 einen Schnitt entlang der Linie XI-XI der Fig. 2,
Fig. 12 einen Schnitt entlang der Linie XII-XII der Fig. 2,
Fig. 13 einen Schnitt entlang der Linie XIII-XIII der Fig. 2,
Fig. 14 eine Schrägansicht gemäß der in Fig. 2 durch den Pfeil S₁₄ angedeuteten Sichtrichtung und
Fig. 15 einen perspektivischen Schnitt entlang der Linie XV-XV der Fig. 2.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart. PKW-, Van- und SUV-Reifen sind insbesondere für Felgen mit einem ganzzahligen Felgendurchmesser von 13 Zoll bis 24 Zoll, bevorzugt von 18 Zoll bis 23 Zoll, vorgesehen und weisen einen Traglastindex von insbesondere 71 bis 126 auf.

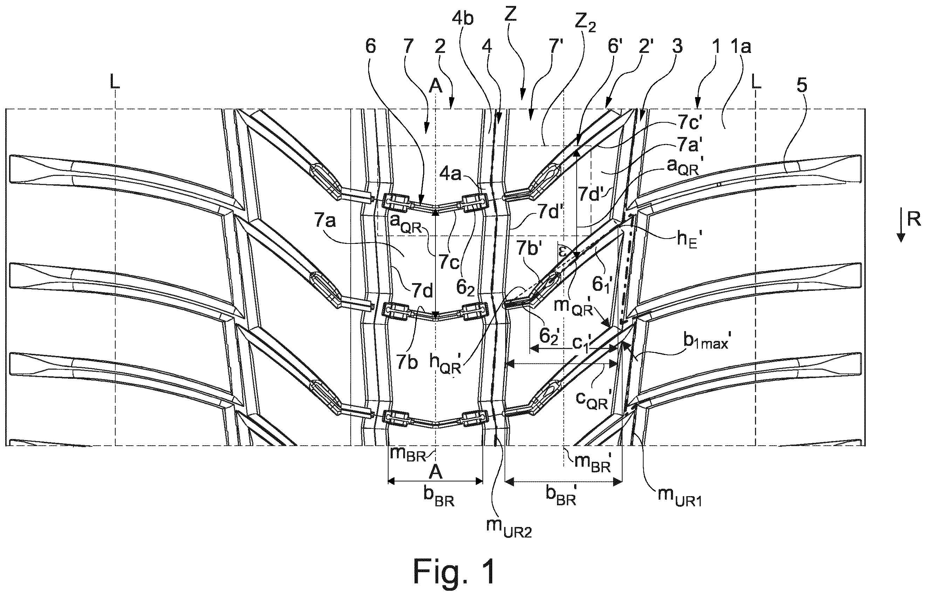

Fig. 1 zeigt eine Draufsicht auf einen vereinfachten Umfangsabschnitt eines Laufstreifens eines Fahrzeugreifens. Die Reifenäquatorialebene ist durch eine gestrichelte Linie A-A und die seitlichen Ränder der Bodenaufstandsfläche des Laufstreifens sind durch gestrichelte Linien L angedeutet. Die Bodenaufstandsfläche entspricht dem statisch ermittelten Footprint gemäß E.T.R.T.O.-Standards (Last bei 70% der maximalen Tragfähigkeit bei einem Innendruck von 85% nach E.T.R.T.O.-Norm).

Der Laufstreifen ist bezüglich der Reifenäquatorialebene (Linie A-A) symmetrisch sowie ferner laufrichtungsgebunden ausgeführt, wobei der Fahrzeugreifen derart an einem Fahrzeug zu montieren ist, dass er die durch den Pfeil R gekennzeichnete Abrollrichtung bei Vorwärtsfahrt aufweist.

Der Laufstreifen weist zwei schulterseitige Profilblockreihen 1 und einen zentralen Laufstreifenbereich Z mit einer von der Reifenäquatorialebene (Linie A-A) halbierten, mittigen Profilblockreihe 2 und zwei halbmittige Profilblockreihen 2' auf. Die schulterseitigen Profilblockreihen 1 sind von den halbmittigen Profilblockreihen 2' durch je eine schulterseitige Umfangsrille 3 und die mittige Profilblockreihe 2 ist von jeder halbmittigen Profilblockreihe 2' durch je eine mittlere Umfangsrille 4 getrennt.

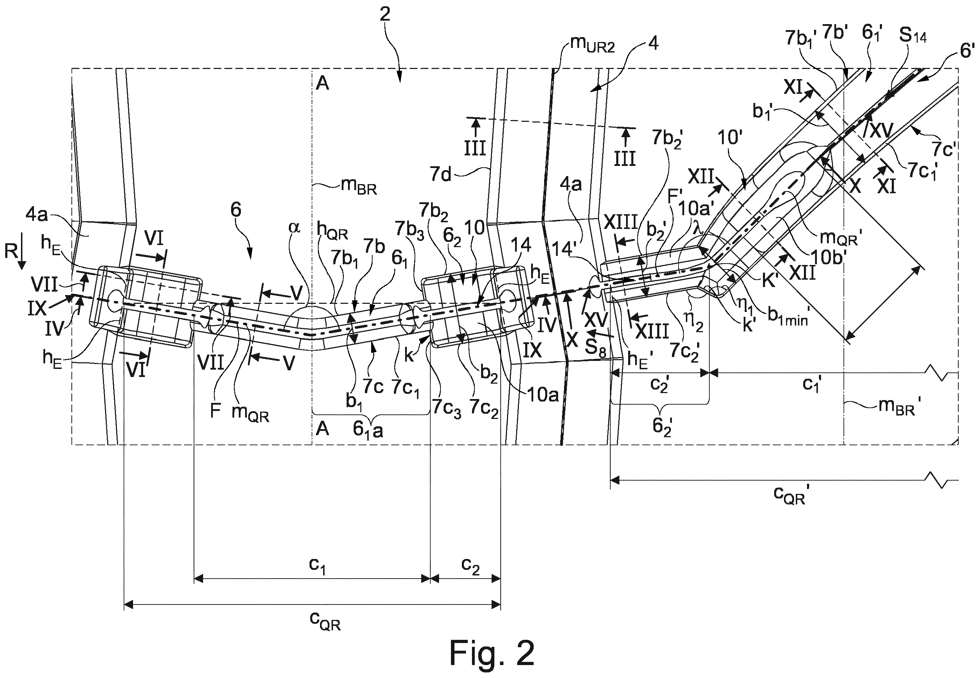

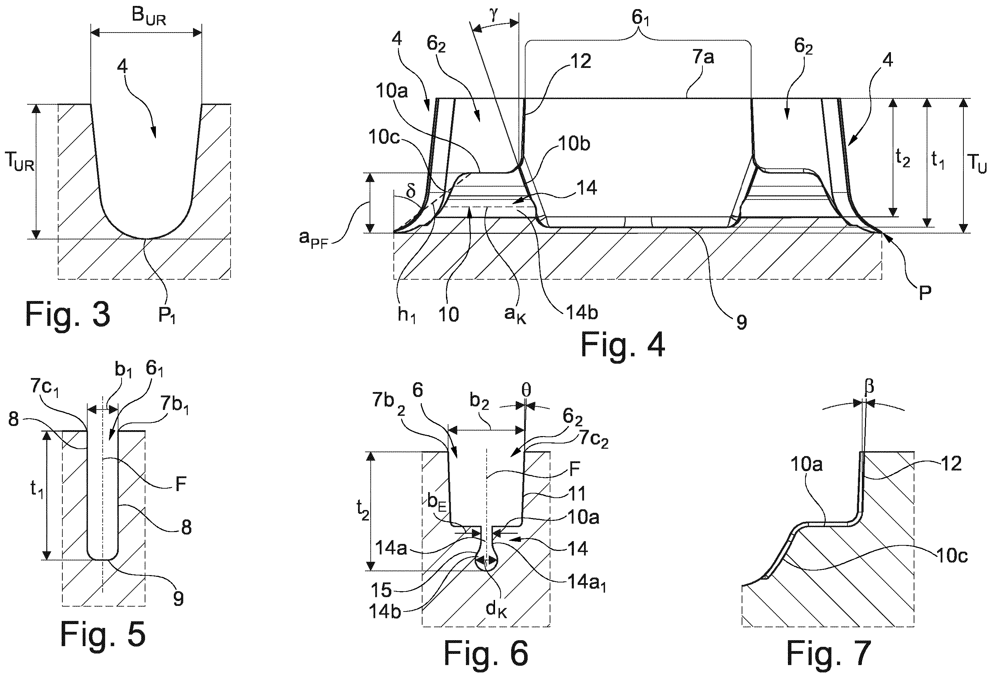

Die schulterseitigen Umfangsrillen 3 verlaufen, in Draufsicht betrachtet, zick-zackförmig, weisen jeweils eine dem Rillenverlauf mittige folgende Rillenmittellinie m_{UR1} auf. Die mittleren Umfangsrille 4 verlaufen, in Draufsicht betrachtet, leicht zickzack-förmig, weisen jeweils eine dem Rillenverlauf mittige folgende Rillenmittellinie m_{UR2} auf und setzen sich, ebenfalls in Draufsicht betrachtet, aus gerade verlaufenden, kurzen Rillenabschnitten 4a und gegenüber diesen länger ausgeführten, gerade verlaufenden, langen Rillenabschnitten 4b zusammen, wobei jeweils ein Rillenabschnitt 4a abwechselnd auf einen Rillenabschnitt 4b folgt und die Rillenabschnitte 4a bezogen auf die Umfangsrichtung gegensinnig zu den Rillenabschnitten 4b geneigt sind. Die Umfangsrillen 3, 4 sind in radialer Richtung auf die jeweils vorgesehene, auf den im Querschnitt tiefsten Punkt P₁ (Fig. 3: Gezeigt für eine mittlere Umfangsrille 4) bezogene Profiltiefe T_{UR} (Fig. 3, Fig. 4) ausgeführt, welche für den bevorzugten Reifentyp üblicherweise 6,5 mm bis 13,0 mm beträgt, und weisen eine in Draufsicht senkrecht zur Rillenmittellinie m_{UR1}, m_{UR2} an der Laufstreifenperipherie ermittelte Breite B_{UR} (Fig. 3: Gezeigt für mittlere Umfangsrille 4, vergl. Lage der Linie III-III in Fig. 2) von 5,0 mm bis 10,0 mm auf. Sind verschieden tief ausgeführte Umfangsrillen 3, 4 vorgesehen, wird unter der Profiltiefe T_{UR} die Tiefe der tiefsten Umfangsrille(n) 3, 4 verstanden.

Die schulterseitigen Profilblockreihen 1 sind jeweils mit in Draufsicht parallel zueinander verlaufenden, schulterseitigen Querrillen 5 versehen, welche im Bereich der "Zacken" der schulterseitigen Umfangsrille 3 in diese einmünden und schulterseitige Profilblöcke 1a, die lediglich schematisch dargestellt sind und in an sich bekannter Weise strukturiert sein können, voneinander trennen.

Die mittige Profilblockreihe 2 und jede halbmittigen Profilblockreihe 2' ist von in Draufsicht parallel zueinander verlaufenden, mittigen Querrillen 6 (mittige Profilblockreihe 2) bzw. von in Draufsicht parallel zueinander verlaufenden, halbmittigen Querrillen 6' (halbmittige Profilblockreihen 2') durchquert und weist durch die Querrillen 6, 6' voneinander getrennte mittige Profilblöcke 7 (mittige Profilblockreihe 2) bzw. halbmittige Profilblöcke 7' (halbmittige Profilblockreihe 2') auf. Die mittigen Profilblöcke 7 weisen jeweils eine in der Laufstreifenperipherie liegende Blockaußenfläche 7a, eine an der einen angrenzenden, mittigen Querrille 6 liegende, beim Abrollen des Reifens bei Vorwärtsfahrt (Pfeil R) zuerst in den Untergrund eintretende, einlaufende Blockkante 7b, eine an der anderen angrenzenden, mittigen Querrille 6 liegende, auslaufende Blockkante 7c und zwei an den mittleren Umfangsrillen 4 liegende, seitliche Blockkanten 7d auf. Die halbmittigen Profilblöcke 7' weisen jeweils eine in der Laufstreifenperipherie liegende Blockaußenfläche 7a', eine an der einen angrenzenden, halbmittigen Querrille 6' liegende, beim Abrollen des Reifens bei Vorwärtsfahrt (Pfeil R) zuerst in den Untergrund eintretende, einlaufende Blockkante 7b', eine an der anderen angrenzenden, halbmittigen Querrille 6' liegende, auslaufende Blockkante 7c' und zwei an den angrenzenden Umfangsrillen 3, 4 liegende, seitliche Blockkanten 7d' auf. Die Blockkanten 7b, 7b', 7c, 7c', 7d, 7d' begrenzenden jeweils die Blockaußenfläche 7a, 7a' mit und verlaufen daher an der Laufstreifenperipherie. Die Profilblockreihe 2, 2' weist eine an der Laufstreifenperipherie in axialer Richtung ermittelte Breite b_{BR} (Profilblockreihe 2), b_{BR}' (Profilblockreihe 2') und eine in Draufsicht in Umfangsrichtung verlaufende, die Breite b_{BR}, b_{BR}' halbierende Reihenmittelline m_{BR} (Profilblockreihe 2), m_{BR}' (Profilblockreihe 2') auf.

Nachfolgend wird zunächst auf die Ausgestaltung der mittigen Querrillen 6 und anschließend auf die Ausgestaltung der halbmittigen Querrillen 6' näher eingegangen. Die Ausgestaltung der Querrillen 6 wird vorwiegend anhand einer einzelnen Querrille 6 erläutert.

Gemäß Fig. 2 ist die mittige Querrille 6 und die mittige Profiblockreihe 2 bezüglich der Reifenäquatorialebene (Linie A-A) und der Reihenmittelline m_{BR} symmetrisch ausgeführt. Die Querrille 6 verläuft, in Draufsicht betrachtet, flach V-förmig, und setzt sich, ebenfalls in Draufsicht betrachtet, aus einem die Reihenmittelline m_{BR} passierenden, rillenartigen Hauptabschnitt 6₁ und zwei sacknutartigen Randabschnitten 6₂ zusammen, wobei die Randabschnitte 6₂ in bezüglich der Umfangsrichtung versatzfrei zueinander verlaufende, kurze Rillenabschnitte 4a der mittleren Umfangsrillen 4 einmünden. Die Querrille 6 ist an der Laufstreifenperipherie von der jeweiligen einlaufenden Blockkante 7b sowie der jeweiligen auslaufenden Blockkante 7c begrenzt, weist eine am Niveau der Laufstreifenperipherie liegende, zu den Blockkanten 7b, 7c übereinstimmend beabstandete, fluchtend mit diesen endende (punktiert angedeutete Hilfslinie h_{E}), flach V-förmig verlaufende Rillenmittellinie m_{QR} (fällt mit einem Abschnitt der Linien IV-IV und IX-IX zusammen) mit einer in die Abrollrichtung bei Vorwärtsfahrt (Pfeil R) weisenden V-Spitze und eine auf die Rillenmittellinie m_{QR} bezogene, in die axiale Richtung projizierte Länge c_{QR} auf, verläuft - ebenfalls in Draufsicht betrachtet und bezogen auf eine die Enden der Rillenmittellinie m_{QR} verbindende, gerade Hilfslinie h_{QR} - in axialer Richtung und ist bezüglich einer an die Rillenmittellinie m_{QR} anschließenden, an den Enden der Rillenmittellinie m_{QR} in Draufsicht geradlinig über diese hinausverlängerten, in radialer Richtung verlaufenden Längsschnittmittelfläche F (vergl. Fig. 5 und Fig. 6) symmetrisch ausgeführt, sodass folglich auch der Hauptabschnitt 6₁ und jeder Randabschnitt 6₂ bezüglich der Längsschnittmittelfläche F symmetrisch ist. "Fluchtend endend" bedeutet, dass die Rillenmittellinie m_{QR} jeweils an einer die an der Querrille 6 liegenden Enden der jeweiligen seitlichen Blockkanten 7d verbindenden, in Draufsicht gerade verlaufenden Hilfslinie h_{E} endet. Querrillen 6, welche in Umfangsrichtung unmittelbar aufeinander folgen, weisen voneinander einen in Umfangsrichtung ermittelten, auf die Rillenmittellinien m_{QR} bezogenen Abstand a_{QR} (Fig. 1) von 20,0 mm bis 40,0 mm auf.

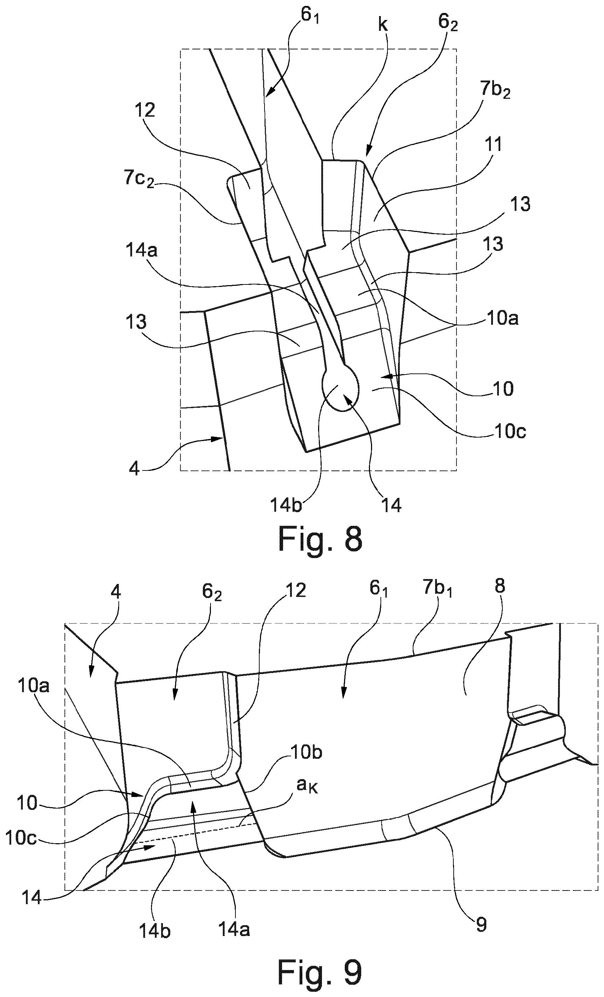

Der Hauptabschnitt 6₁ verläuft - analog zur Querrille 6 selbst - in Draufsicht betrachtet, flach V-förmig, ist von zwei an der Reihenmittellinie m_{BR} aneinander anschließenden, miteinander einen auf die Rillenmittellinie m_{QR} bezogenen Winkel α von 150° bis 170°, insbesondere von 155° bis 165°, einschließenden Hauptabschnitthälften 6₁a gebildet, ist an der Laufstreifenperipherie durch parallel zueinander sowie flach V-förmig und insbesondere vorzugsweise knickfrei verlaufende, mittige Kantenabschnitte 7b₁, 7c₁ der Blockkanten 7b, 7c begrenzt, weist eine senkrecht zur Rillenmittellinie m_{QR} zwischen den mittigen Kantenabschnitten 7b₁, 7c₁ ermittelte, konstante Breite b₁ (vergl. Fig. 5) von 2,0 mm bis 4,0 mm, insbesondere von bis zu 3,0 mm, eine auf die Rillenmittellinie m_{QR} bezogene, in die axiale Richtung projizierte Länge c₁ von zumindest 50%, insbesondere von zumindest 55%, der Länge c_{QR} der Querrille 6 und in radialer Richtung eine maximale Tiefe t₁ (Tiefe an der tiefsten Stelle, Fig. 4, Fig. 5) von 70% bis 100% der Profiltiefe T_{UR} (Fig. 4), insbesondere von zumindest 80% und höchstens der um 0,30 mm verringerten Profiltiefe T_{UR}, und bevorzugt von zumindest 90% der Profiltiefe T_{UR} auf. Der Hauptabschnitt 6₁ ist durch zwei an die mittigen Kantenabschnitte 7b₁, 7c₁ anschließende Rillenwände 8 (Fig. 5; Fig. 9: gezeigt für Kantenabschnitt 7b₁) und einen Rillengrund 9 (Fig. 4, Fig. 5) begrenzt. Gemäß Fig. 5 verlaufen die Rillenwände 8, im in Draufsicht senkrecht zur Rillenmittellinie m_{QR} verlaufenden Querschnitt betrachtet, zur radialen Richtung unter einem Winkel von 0° bis 3°, beim Ausführungsbeispiel von 0°. Gemäß Fig. 4 verläuft der Rillengrund 9 in der Längsschnittmittelfläche F auf der maximalen Tiefe t₁ und ist, im zuletzt erwähnten Querschnitt betrachtet, flach U-förmig gerundet ausgeführt (Fig. 5).

Wie Fig. 2 ferner zeigt, verlaufen die Randabschnitte 6₂, in Draufsicht betrachtet und bezogen auf die Rillenmittelline m_{QR}, gerade sowie in geradliniger Verlängerung des Hauptabschnitts 6₁, also der jeweils angrenzenden Hauptabschnitthälfte 6₁a. Jeder Randabschnitt 6₂ ist an der Laufstreifenperipherie durch gerade und parallel zueinander sowie parallel zur Rillenmittellinie m_{QR} verlaufende, randseitige Kantenabschnitte 7b₂, 7c₂ der Blockkanten 7b, 7c sowie durch eine durch den Hauptabschnitt 6₁ zweigeteilte Endkante k, welche von zwei in Draufsicht gerade und fluchtend miteinander verlaufenden Kantenabschnitten 7b₃, 7c₃ der Blockkanten 7b, 7c gebildet ist, begrenzt, weist eine senkrecht zur Rillenmittellinie m_{QR} zwischen den randseitigen Kantenabschnitten 7b₂, 7c₂ ermittelte, konstante Breite b₂ (vergl. Fig. 6) von 150% bis 300%, insbesondere von bis zu 250%, bevorzugt von bis zu 230%, der Breite b₁ des Hauptabschnitts 6₁, eine auf die Rillenmittellinie m_{QR} bezogene, in die axiale Richtung projizierte Länge c₂ von 15% bis 25% der Länge c_{QR} der Querrille 6 und in radialer Richtung eine maximale Tiefe t₂ (Tiefe an der tiefsten Stelle, Fig. 4, Fig. 6) auf, welche höchstens der maximalen Tiefe t₁ (Fig. 4) der Hauptabschnitts 6₁ beträgt und vorzugsweise 0,50 mm bis 2,00 mm kleiner ist als die maximale Tiefe t₁.

Die weitere Ausgestaltung der Randabschnitte 6₂ wird nachfolgend anhand eines einzelnen Randabschnitts 6₂ erläutert.

Wie Fig. 2, Fig. 4, Fig. 8 und Fig. 9 insbesondere in Kombination miteinander zeigen, ist im Randabschnitt 6₂ ein Rillenplateau 10 ausgebildet, welches gemäß Fig. 4 gegenüber der maximalen Tiefe t₁ des Hauptabschnitts 6₁ in radialer Richtung erhaben ist und gemäß Fig. 2 in Draufsicht über den kompletten Randabschnitt 6₂ reicht.

Gemäß Fig. 8 ist der Randabschnitt 6₂ in radialer Richtung von einer am Rillenplateau 10 ausgebildeten Plateaudeckfläche 10a sowie - jeweils im Bereich radial außerhalb des Rillenplateaus 10 - von an den randseitigen Kantenabschnitten 7b₂, 7c₂ anschließenden, im im Draufsicht senkrecht zur Rillenmittellinie m_{QR} verlaufenden Querschnitt zur radialen Richtung unter einem Winkel θ von 0° bis 4° verlaufenden Rillenwänden 11 (vergl. Fig. 6 sowie Lage der Linie VI-VI in Fig. 2) und rippeninnenseitig durch eine an die Endkante k anschließende, zweigeteilte Endflanke 12 (vergl. Fig. 4, Fig. 6) begrenzt. Gemäß Fig. 7 verläuft die Endflanke 12, in in Draufsicht parallel zur Rillenmittellinie m_{QR} verlaufenden Schnitten betrachtet (vergl. Lage der Linie VII-VII in Fig. 2), gerade sowie zur radialen Richtung unter einem konstanten Winkel β von 0° bis 2°, wobei sich die Endflanken 12 der beiden Randabschnitte 6₂ bei einem von 0° abweichenden Winkel β in Richtung Blockaußenflächen 7a aneinander annähern (Fig. 4).

Das Rillenplateau 10 ist in radialer Richtung von der bereits erwähnten Plateaudeckfläche 10a (Fig. 4, Fig. 6 bis Fig. 9), am Hauptabschnitt 6₁ von einer zum Rillengrund 9 verlaufenden, rilleninnenseitigen Plateauseitenfläche 10b (Fig. 4, Fig. 9) und an seiner der jeweiligen mittleren Umfangsrille 4, genauer dem jeweiligen kurzen Rillenabschnitt 4a (Fig. 2), zugewandten Seite durch eine zur Umfangsrille 4 verlaufende, rillenaußenseitige Plateauseitenfläche 10c (Fig. 4, Fig. 7 bis Fig. 9) begrenzt. Wie Fig. 4 zeigt, verläuft die Plateaudeckfläche 10a parallel zur Laufstreifenperipherie und weist zum Niveau der Profiltiefe T_{UR} in radialer Richtung einen Abstand a_{PF} von 3,00 mm bis 5,00 mm, insbesondere von 3,50 mm bis 4,50 mm, auf. Die rilleninnenseitige Plateauseitenfläche 10b verläuft, im in Draufsicht entlang der Rillenmittellinie m_{QR} verlaufenden Schnitt betrachtet (vergl. Lage der Linie IV-IV in Fig. 2), gerade sowie zur radialen Richtung unter einem Winkel γ von 15° bis 25°, insbesondere von 18° bis 22°. Die rillenaußenseitige Plateauseitenfläche 10c verläuft, in zuletzt erwähnten Schnitt betrachtet, langgezogen S-förmig geschwungen, sowie bezogen auf eine gerade zwischen ihren Enden verlaufende Hilfslinie h₁ zur radialen Richtung unter einem Winkel δ von 40° bis 70°.

Gemäß Fig. 8 sind - mit Ausnahme der Plateauseitenfläche 10b - die gegenseitigen Anschlussstellen der den Randabschnitt 6₂ und/oder das Rillenplateau 10 begrenzenden Flächen (Plateaudeckfläche 10a, Plateauseitenfläche 10c, Rillenwänden 11, Endflanke 12) durch Übergangsrundungen 13 gebildet, welche tangentiale, also knick- und kantenfreie, Übergänge zwischen den erwähnten Flächen sicherstellen.

Wie Fig. 2, Fig. 4, Fig. 8 und Fig. 9 insbesondere in Kombination miteinander zeigen, ist das Rillenplateau 10 von einem in Draufsicht entlang der Rillenmittellinie m_{QR} (Fig. 2) ausgebildeten, von der Plateaudeckfläche 10a ausgehend, in radialer Richtung in das Rillenplateau 10 hineinragenden (Fig. 4, Fig. 8, Fig. 9), zwischen dem Hauptabschnitt 6₁, genauer der jeweiligen Hauptabschnitthälfte 6₁a (Fig. 2), und der jeweiligen mittleren Umfangsrille 4 verlaufenden Plateaudurchgang 14 durchsetzt. Gemäß Fig. 6, Fig. 8 und Fig. 9 setzt sich der Plateaudurchgang 14 in radialer Richtung aus einem von der Plateaudeckfläche 10a ausgehenden Einschnitt 14a und einem von der Plateaudeckfläche 10a in radialer Richtung beabstandeten, an den Einschnitt 14a anschließenden Kanal 14b zusammen, sodass sowohl der Einschnitt 14a als auch der Kanal 14b das Rillenplateau 10 durchragen. Wie Fig. 6 zeigt, ist der Einschnitt 14a durch zwei in radialer Richtung verlaufende Einschnittwände 14a₁ begrenzt, wobei der Einschnitt 14a eine als kleinstmöglichen Abstand zwischen den Einschnittwänden 14a₁ ermittelte Breite b_{E} von 0,60 mm bis 0,90 mm, insbesondere von 0,70 mm bis 0,80 mm, aufweist. Der Kanal 14b weist, im in Draufsicht senkrecht zur Rillenmittellinie m_{QR} verlaufenden Querschnitt betrachtet (vergl. Lage der Linie VI-VI in Fig. 2), einen kreisförmigen Querschnitt, einen Durchmesser d_{K} von 1,00 mm bis 2,00 mm, insbesondere von 1,30 mm bis 1,80 mm, und eine mit seinem geometrischen Schwerpunkt zusammenfallende, in einer in radialer Richtung ermittelten konstanten Tiefe verlaufende Kanalachse a_{K} (Fig. 4) auf, wobei der Kanal 14b den Einschnitt 14a an jeder Einschnittwand 14a₁ in übereinstimmenden Ausmaß überragt. Der Kanal 14b weist zu den Einschnittwänden 14a ausgebildete Übergansrundungen 15 auf, welche im erwähnten Querschnitt einen tangentialen Übergang zwischen der nicht bezifferten Kanalwand und der jeweiligen Einschnittwand 14a₁ sicherstellen und bei der Ermittlung des Durchmessers d_{K} sowie des geometrischen Schwerpunkts, also die Lage der Kanalachse a_{K}, unberücksichtigt bleiben.

Nachfolgend wird auf die Ausgestaltung der Querrillen 6' näher eingegangen. Die Ausgestaltung der Querrillen 6' wird vorwiegend anhand einer einzelnen Querrille 6' erläutert.

Gemäß Fig. 1 setzt sich die Querrille 6', in Draufsicht betrachtet, aus einem die Reihenmittellinie m_{BR}' passierenden, rillenartigen Hauptabschnitt 6₁' und einem einzigen, gegenüber dem Hauptabschnitt 6₁' schmäler ausgeführten, sacknutartigen Randabschnitt 6₂' zusammen, wobei der Hauptabschnitt 6₁' in die jeweilige schulterseitige Umfangsrille 3 und der Randabschnitt 6₂' axial gegenüberliegend zum entsprechenden Randabschnitt 6₂ in einen kurzen Rillenabschnitt 4a der angrenzenden mittleren Umfangsrille 4 einmündet. Die Querrille 6' ist an der Laufstreifenperipherie von der jeweiligen einlaufenden Blockkante 7b' sowie der jeweiligen auslaufenden Blockkante 7c' begrenzt, weist eine am Niveau der Laufstreifenperipherie liegende, zu den Blockkanten 7b', 7c' übereinstimmend beabstandete, fluchtend mit diesen endende (punktiert angedeutet, vergl. Fig. 2) Rillenmittellinie m_{QR}' (vergl. Fig. 2, fällt mit einem Abschnitt der Linien XV-XV zusammen) mit einem am gegenseitigen Anschluss des Hauptabschnitts 6₁' an den Randabschnitt 6₂' vorliegenden Knickpunkt K' (Fig. 2) sowie ferner eine auf die Rillenmittellinie m_{QR}' bezogene, in die axiale Richtung projizierte Länge C_{QR}' (vergl. Fig. 2) auf, verläuft - ebenfalls in Draufsicht betrachtet und bezogen auf eine die Enden der Rillenmittellinie m_{QR}' verbindende, gerade Hilfslinie h_{QR}' - zur Umfangsrichtung unter einem Winkel ε von 35° bis 65°, insbesondere von 45° bis 55°, wobei die Querrille 6' bezogen auf die Hilfslinie h_{QR}' derart relativ zur axialen Richtung geneigt ist, dass beim Abrollen des Reifens bei Vorwärtsfahrt (Pfeil R) das im Randabschnitt 6₂' liegende Ende der Hilfslinie h_{QR}' vor dem anderen Ende der Hilfslinie h_{QR}' in den Untergrund eintritt. "Fluchtend endend" bedeutet, dass die Rillenmittellinie m_{QR}' jeweils an einer die an der Querrille 6' liegenden Enden der jeweiligen seitlichen Blockkanten 7d' verbindenden, in Draufsicht gerade verlaufenden Hilfslinie h_{E}' endet (vergl. Fig. 2). Querrillen 7', welche in Umfangsrichtung unmittelbar aufeinander folgen, weisen voneinander einen in Umfangsrichtung ermittelten, auf die Rillenmittellinien m_{QR}' bezogenen Abstand a_{QR}' (Fig. 1) von 20,0 mm bis 40,0 mm auf.

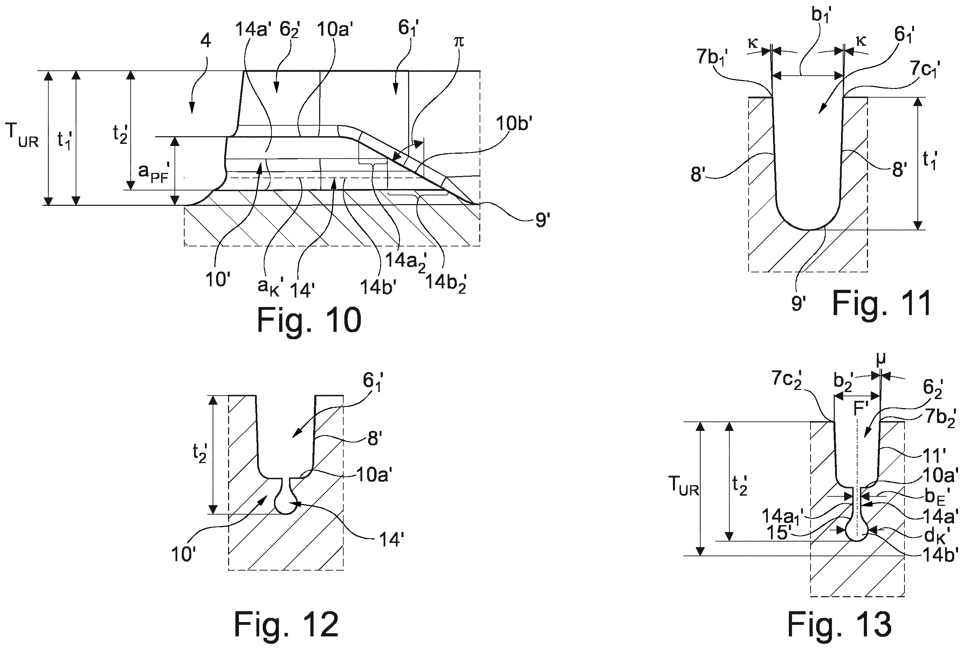

Der Hauptabschnitt 6₁' verläuft, in Draufsicht betrachtet, durchgehend gebogen (bogenförmige), ist gemäß Fig. 2 an der Laufstreifenperipherie durch insbesondere zumindest abschnittsweise parallel zueinander sowie durchgehend gebogen verlaufende Kantenabschnitte 7b₁', 7c₁' der Blockkanten 7b', 7c' sowie an seinem rippeninnenseitigen Ende durch eine an den Kantenabschnitte 7c₁' anschließende Endkante k' begrenzt, weist eine senkrecht zur Rillenmittellinie m_{QR}' zwischen den Kantenabschnitten 7b₁', 7c₁' ermittelte Breite b₁' (vergl. Fig. 11), eine auf die Rillenmittellinie m_{QR}' sowie den Knickpunkt K' bezogene, in die axiale Richtung projizierte Länge c₁' (vergl. Fig. 1) von zumindest 65%, insbesondere von zumindest 70%, bevorzugt von zumindest 75%, der Länge C_{QR}' (vergl. Fig. 1) der Querrille 6' und in radialer Richtung eine maximale Tiefe t₁' (Tiefe an der tiefsten Stelle, Fig. 10, Fig. 11) von 70% bis 100% der Profiltiefe T_{UR} (Fig. 3), insbesondere von zumindest 80% und höchstens der um 0,30 mm verringerten Profiltiefe T_{UR}, und bevorzugt von zumindest 90% der Profiltiefe T_{UR} auf. "Senkrecht zur Rillenmittellinie m_{QR}' bedeutet senkrecht zu einer an die jeweilige Stelle der Rillenmittellinie m_{QR}' angelegten Tangente. Die Breite b₁' nimmt ausgehend vom Randabschnitt 6₂' zumindest bereichsweise über die Kantenabschnitte 7b₁', 7c₁', insbesondere über die kompletten Kantenabschnitte 7b₁', 7c₁', fortlaufend zu und weist am Randabschnitt 6₂' einen minimalen Wert b₁ₘᵢₙ' und an ihrem an der schulterseitigen Umfangsrille 3 liegenden Ende einen maximalen Wert b₁ₘₐₓ' (Fig. 1) auf. Der maximale Wert b₁ₘₐₓ' (Fig. 1) beträgt 3,00 mm bis 8,00 mm und der minimale Wert beträgt 50% bis 70%, insbesondere 55% bis 65%, des maximalen Werts b₁ₘₐₓ'. Da der Randabschnitt 6₂' - wie bereits erwähnt - schmäler ist als der Hauptabschnitt 6₁' ist der maximale Wert b₁ₘₐₓ' gleichzeitig der maximale Wert der Breite der Querrille 6'. Die erwähnte maximale Tiefe t₁' ist gleichzeitig die maximale Tiefe (Tiefe an der tiefsten Stelle) der Querrille 6'.

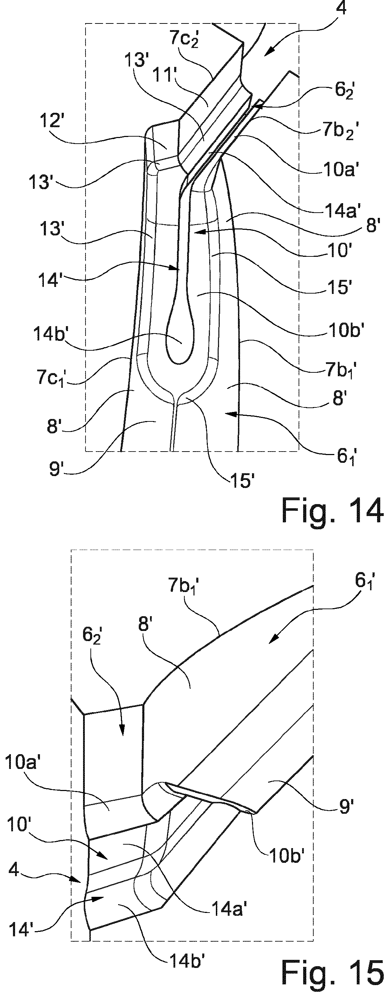

Der Hauptabschnitt 6₁' ist durch zwei an die mittigen Kantenabschnitte 7b₁', 7c₁' anschließende Rillenwände 8' (Fig. 11, Fig. 12, Fig.14, Fig. 15: gezeigt für Kantenabschnitt 7b₁'), einen Rillengrund 9' (Fig. 11, Fig., 14, Fig. 15) und eine Endflanke 12' (Fig. 14) mitbegrenzt, wobei die Endflanke 12' - wie Fig. 2 in Kombination mit Fig. 14 zeigt - an eine zur Knickstelle K' (Fig. 2) in Umfangsrichtung beabstandete, abschnittsweise im Hauptabschnitt 6₁' und abschnittsweise im Randabschnitt 6₂' ausgebildete, gerade verlaufende Endkante k' (Fig. 2) anschließt, welche gemäß Fig. 2 mit dem Kantenabschnitt 7c₁' einen innerhalb des Hauptabschnitts 6₁' liegenden, in Draufsicht stumpfen Winkel η₁ einschließt. Gemäß Fig. 11 verlaufen die Rillenwände 8', im in Draufsicht senkrecht zur Rillenmittellinie m_{QR}' verlaufenden Querschnitt betrachtet, zur radialen Richtung unter einem Winkel κ von 0° bis zu 3°, insbesondere von zumindest 1°. Der Rillengrund 9' verläuft, im zuletzt erwähnten Querschnitt betrachtet, mit einem tiefsten Punkt auf der maximalen Tiefe t₁' und ist flach U-förmig gerundet ausgeführt. Die Endflanke 12' verläuft, im in Draufsicht senkrecht zur Endkante k' verlaufenden Querschnitt betrachtet, zur radialen Richtung unter einem Winkel von 0° bis 5°, insbesondere von bis zu 3° (Winkel nicht gezeigt).

Gemäß Fig. 2 ist der Randabschnitt 6₂' bezüglich einer an die Rillenmittellinie m_{QR}' anschließenden, in Draufsicht geradlinig über diese hinausverlängerte, in radialer Richtung verlaufende Längsschnittmittelfläche F' (vergl. Fig. 13) symmetrisch ausgeführt. Der Randabschnitt 6₂' verläuft, in Draufsicht betrachtet und bezogen auf die Rillenmittellinie m_{QR}', gerade sowie bezüglich der Umfangsrichtung gleichsinnig geneigt zum Hauptabschnitt 6₁', schließt mit dem Hauptabschnitt 6₁' einen auf die Rillenmittellinie m_{QR}' bezogenen Winkel λ von 135° bis 165°, insbesondere von 150° bis 160°, ein, ist an der Laufstreifenperipherie durch gerade, parallel zueinander sowie parallel zur Rillenmittellinie m_{QR}' verlaufende Kantenabschnitte 7b₂', 7c₂' der Blockkanten 7b', 7c' begrenzt, wobei der Kantenabschnitt 7b₂' an den Kantenabschnitt 7b₁' und der Kantenabschnitt 7c₂' an die bereits erwähnte Endkante k' anschließt und wobei der Kantenabschnitt 7c₂' mit der Endkante k' in Draufsicht einen außerhalb der Querrille 6' liegenden stumpfen Winkel η₂ einschließt. Der Randabschnitt 6₂' weist eine senkrecht zur Rillenmittellinie m_{QR}' zwischen den Kantenabschnitten 7b₂', 7c₂' ermittelte, konstante Breite b₂' (vergl. Fig. 13) von 40% bis 55% des maximalen Werts b₁ₘₐₓ' (Fig. 1) der Breite b₁' des Hauptabschnitts 6₁', eine auf die Rillenmittellinie m_{QR}' bezogene, in die axiale Richtung projizierte Länge c₂' von 15% bis 25% der Länge C_{QR}' der Querrille 6' und in radialer Richtung eine maximale Tiefe t₂' (Tiefe an der tiefsten Stelle, Fig. 10, Fig. 13) auf, welche höchstens der maximalen Tiefe t₁' (Fig. 10) des Hauptabschnitts 6₁' beträgt und vorzugsweise 0,50 mm bis 2,00 mm kleiner ist als die maximale Tiefe t₁'.

Wie Fig. 2, Fig. 10, Fig. 14 und Fig. 15 insbesondere in Kombination miteinander zeigen, ist im Randabschnitt 6₂' ein in den Hauptabschnitt 6₁' hineinragendes, in diesem endendes Rillenplateau 10' ausgebildet, welches gemäß Fig. 10 gegenüber der maximalen Tiefe t₁' des Hauptabschnitts 6₁' in radialer Richtung erhaben ist und gemäß Fig. 2 in Draufsicht über den kompletten Randabschnitt 6₂' reicht.

Gemäß Fig. 14 ist der Randabschnitt 6₂' in radialer Richtung von einer am Rillenplateau 10' ausgebildeten, in den Hauptabschnitt 6₁' hineinragenden Plateaudeckfläche 10a' (vergl. Fig. 10) sowie - jeweils im Bereich radial außerhalb des Rillenplateaus 10' - von an den Kantenabschnitten 7b₂', 7c₂' anschließenden, im im Draufsicht senkrecht zur Rillenmittellinie m_{QR}' verlaufenden Querschnitt zur radialen Richtung unter einem Winkel µ von 0° bis 4° verlaufenden Rillenwände 11' (Fig. 13 sowie Lage der Linie XIII-XIII in Fig. 2) begrenzt.

Wie Fig. 10, Fig. 14, und Fig. 15 insbesondere in Kombination miteinander zeigen, ist das Rillenplateau 10' in radialer Richtung von der bereits erwähnten Plateaudeckfläche 10a' und einer ausschließlich im Hauptabschnitt 6₁' verlaufenden, in Draufsicht entlang der Rillenmittellinie m_{QR}' langgezogenen (siehe Fig. 2) Plateaurampenfläche 10b' mitbegrenzt. Die Plateaudeckfläche 10a' ist gegenüber der Laufstreifenperipherie in radialer Richtung abgesetzt, verläuft parallel zur Laufstreifenperipherie (Fig. 10, Fig. 13), reicht bis zur jeweiligen mittleren Umfangsrille 4 (Fig. 14, Fig. 15) und weist zum Niveau der Profiltiefe T_{UR} in radialer Richtung einen Abstand a_{PF}' (Fig. 10) von 3,00 mm bis 5,00 mm, insbesondere von 3,50 mm bis 4,50 mm, auf. Gemäß Fig. 10 verläuft die Plateaurampenfläche 10b', in in Draufsicht parallel zur Rillenmittellinie m_{QR} verlaufenden Schnitten betrachtet (vergl. Lage der Linie X-X in Fig. 2), gerade sowie zur radialen Richtung unter einem Winkel π von 55° bis 65°, wobei sich die Plateaurampenfläche 10b' mit zunehmender Entfernung von der Plateaudeckfläche 10a' dem Rillengrund 9' annähert, also zum Rillengrund 9' abfällt, sodass das Rillenplateau 10' über die Plateaurampenfläche 10b' ausläuft.

Gemäß Fig. 14 sind die gegenseitigen Anschlussstellen der den Randabschnitt 6₂' und/oder das Rillenplateau 10' begrenzenden Flächen (Plateaudeckfläche 10a', Plateauseitenfläche 10b', Rillenwand 11') sowie die gegenseitige Anschlussstellen dieser Flächen mit den zumindest abschnittsweise radial außerhalb des Rillenplateaus 10' liegenden Flächen (Endflanke 12', Rillenwände 8') sowie die gegenseitige Anschlussstelle der Plateaurampenfläche 10b' zum Rillengrund 9' jeweils durch eine Übergangsrundung 13' gebildet, welche tangentiale, also knick- und kantenfreie, Übergänge zwischen den erwähnten Flächen sicherstellen.

Wie Fig. 2, Fig. 10, Fig. 12, Fig. 14 und Fig. 15 insbesondere in Kombination miteinander zeigen, ist das Rillenplateau 10' von einem in Draufsicht entlang der Rillenmittellinie m_{QR}' (Fig. 2) ausgebildeten, von der Plateaudeckfläche 10a' ausgehend in radialer Richtung in das Rillenplateau 10 hineinragenden (Fig. 10, Fig. 12, Fig. 14, Fig. 15), zwischen dem Hauptabschnitt 6₁' (Fig 2, Fig. 10, Fig. 14, Fig. 15) und der jeweiligen mittleren Umfangsrille 4 verlaufenden Plateaudurchgang 14' durchsetzt. Gemäß Fig. 10, Fig. 14 und Fig. 15 setzt sich der Plateaudurchgang 14' in radialer Richtung aus einem von der Plateaudeckfläche 10a' und der Plateaurampenfläche 10b' ausgehenden Einschnitt 14a' und einem von der Plateaudeckfläche 10a' in radialer Richtung beabstandeten, an den Einschnitt 14a' anschließenden Kanal 14b' zusammen, sodass sowohl der Einschnitt 14a' als auch der Kanal 14b' das Rillenplateau 10' durchragen, wobei der Einschnitt 14a' einen an der Plateaurampenfläche 10b' liegenden, im entlang der Rillenmittellinie m_{QR}' ausgerichteten Längsschnitt keilförmig auslaufenden Einschnittaustritt 14a₂' (Fig. 10) und der Kanal 14b', im zuletzt erwähnten Längsschnitt betrachtet, einen keilförmig auslaufenden Kanalaustritt 14b₂' aufweist (Fig. 10). Der Einschnitt 14a' ist durch zwei in radialer Richtung verlaufende Einschnittwände 14a₁' begrenzt (Fig. 13) und weist eine als kleinstmöglichen Abstand zwischen diesen ermittelte Breite b_{E}' (Fig. 13) von 0,60 mm bis 0,90 mm, insbesondere von 0,70 mm bis 0,80 mm, auf. Gemäß Fig. 13 weist der Kanal 14b', im in Draufsicht senkrecht zur Rillenmittellinie m_{QR} verlaufenden Querschnitt betrachtet (vergl. Lage der Linie XIII-XIII in Fig. 2), einen kreisförmigen Querschnitt, einen Durchmesser d_{K}' von 1,00 mm bis 2,00 mm, insbesondere von 1,30 mm bis 1,80 mm, und eine mit seinem geometrischen Schwerpunkt zusammenfallende, in einer in radialer Richtung ermittelten konstanten Tiefe verlaufende Kanalachse a_{K}' (Fig. 10) auf, wobei der Kanal 14b den Einschnitt 14a an jeder Einschnittwand 14a₁' in übereinstimmenden Ausmaß überragt. Der Kanal 14b' weist zu den Einschnittwänden 14a' ausgebildete Übergansrundungen 15' auf, welche im erwähnten Querschnitt einen tangentialen Übergang zwischen der nicht bezifferten Kanalwand und der jeweiligen Einschnittwand 14a' sicherstellen und bei der Ermittlung des Durchmessers d_{K}' sowie des geometrischen Schwerpunkts, also die Lage der Kanalachse a_{K}' unberücksichtigt bleiben.

Die Erfindung ist auf das beschriebene Ausführungsbeispiel nicht beschränkt.

Die im Zusammenhang mit dem Ausführungsbeispiel beschriebenen Querrillen 6 stellen eine bevorzugte Ergänzung zu gemäß der Erfindung ausgeführten Querrillen dar.

Der Laufstreifen muss nicht laufrichtungsgebunden ausgeführt sein.

Der Laufstreifen weist zumindest eine an zumindest einer Seite von einer Umfangsrille begrenzte Profilblockreihe mit Querrillen mit einem Rillenplateau mit einem Plateaudurchgang auf. Die Querrillen können - bezogen auf ihre Rillenmittellinien - frei von Knickpunkten sein.

Die Umfangsrille(n) kann bzw. können, in Draufsicht betrachtet, beispielsweise auch gerade oder beliebig gewellt, etwa in Form einer Zickzackwelle oder einer geschwungenen Welle, verlaufen. Bei einer schulterseitigen Profilblockreihe ist die Reihenmittellinie auf eine innerhalb der Bodenaufstandsfläche in axialer Richtung ermittelte Breite bezogen.

Der Plateaudurchgang umfasst zumindest den Einschnitt, kann daher ausschließlich vom diesem, und daher ohne Kanal, gebildet sein.

Die Plateaudeckfläche ist gegenüber der Laufstreifenperipherie in radialer Richtung abgesetzt, d.h. sie reicht nicht bis zur Laufstreifenperipherie, sondern endet vor dieser in einem in radialer Richtung ermittelten Abstand.

Der Kanal und/oder die Plateaudeckfläche können, im in Draufsicht entlang der Rillenmittellinie verlaufenden Schnitt betrachtet, relativ zur Laufstreifenperipherie geneigt verlaufen. Die Plateaurampenfläche weist, im in Draufsicht entlang der Rillenmittellinie verlaufenden Schnitt betrachtet, relativ zur Laufstreifenperipherie eine größere Neigung, d.h. einen größeren Winkel, auf als die Plateaudeckfläche. Beim beschriebenen Ausführungsbeispiel verläuft die Plateaudeckfläche, im zuletzt genannten Schnitt betrachtet, parallel zur Laufstreifenperipherie, sodass der erwähnte Winkel 0° beträgt.

Der Kanal kann - bezogen auf seine Kanalachse - relativ zur Laufstreifenperipherie unter einem Winkel von insbesondere 5° bis 15° geneigt verlaufen. Ferner kann der Kanal aus zumindest einem, insbesondere einem einzigen, bezogen auf die Kanalachse relativ zur Laufstreifenperipherie unter einem Winkel von insbesondere 5° bis 25° geneigt verlaufenden Kanalabschnitt und einem, insbesondere einem einzigen, bezogen auf die Kanalachse parallel zur Laufstreifenperipherie verlaufenden Kanalabschnitt zusammengesetzt sein.

Die Plateaudeckfläche kann relativ zur Laufstreifenperipherie unter einem Winkel von 5° bis 25° geneigt verlaufen.

### Bezugszeichenliste

- 1: schulterseitige Profilblockreihe
- 1a: schulterseitiger Profilblock
- 2: mittige Profilblockreihe
- 2': halbmittige Profilblockreihe
- 3: schulterseitige Umfangsrille
- 4: mittlere Umfangsrille
- 4a: kurzer Rillenabschnitt
- 4b: langer Rillenabschnitt
- 5: schulterseitige Querrille
- 6: mittige Querrille
- 6₁: Hauptabschnitt
- 6₁a: Hauptabschnitthälfte
- 6₂: Randabschnitt
- 6': halbmittige Querrille
- 6₁': Hauptabschnitt
- 6₂': Randabschnitt
- 7: mittiger Profilblock
- 7a: Blockaußenfläche
- 7b: einlaufende Blockkante
- 7b₁: mittiger Kantenabschnitt
- 7b₂: randseitiger Kantenabschnitt
- 7b₃: Kantenabschnitt
- 7c: auslaufende Blockkante
- 7c₁: mittiger Kantenabschnitt
- 7c₂: randseitiger Kantenabschnitt
- 7c₃: Kantenabschnitt
- 7d: seitliche Blockkante
- 7': halbmittiger Profilblock
- 7a': Blockaußenfläche
- 7b: einlaufende Blockkante
- 7b₁': Kantenabschnitt
- 7b₂': Kantenabschnitt
- 7c': auslaufende Blockkante
- 7c₁': Kantenabschnitt
- 7c₂': Kantenabschnitt
- 7d': seitliche Blockkante
- 8, 8': Rillenwand
- 9, 9': Rillengrund
- 10, 10': Rillenplateau
- 10a, 10a': Plateaudeckfläche
- 10b: Plateauseitenfläche
- 10b': Plateaurampenfläche
- 10c: Plateauseitenfläche
- 11, 11': Rillenwand
- 12, 12': Endflanke
- 13, 13': Übergangsrundung
- 14, 14': Plateaudurchgang
- 14a, 14a': Einschnitt
- 14a₁, 14a₁': Einschnittwand
- 14a₂': Einschnittaustritt
- 14b, 14b': Kanal
- 14b₂': Kanalaustritt
- 15, 15': Übergangsrundung
- A-A: Linie (Reifenäquatorialebene)
- a_{K}, a_{K}': Kanalachse
- a_{PF}, a_{PF}', a_{QR}, a_{QR}': Abstand
- b₁, b₂, b₂', b_{E}, b_{E}': Breite
- b_{BR}, b_{BR}', B_{UR}: Breite
- b₁ₘₐₓ': maximaler Wert
- b₁ₘᵢₙ': minimaler Wert
- c₁, c₁', c₂, c₂', c_{QR}, C_{QR}': Länge
- d_{K}, d_{K}': Durchmesser
- F, F': Längsschnittmittelfläche
- k, k': Endkante
- K': Knickpunkt
- h₁, h_{E}, h_{E}', h_{QR}, h_{QR}'..: Hilfslinie
- L: Linie (seitlicher Rand der Bodenaufstandsfläche)
- m_{BR}, m_{BR}': Reihenmittellinie
- m_{QR}, m_{QR}': Rillenmittellinie
- m_{UR1}, M_{UR2}: Rillenmittellinie
- P₁: tiefster Punkte
- R: Pfeil (Abrollrichtung)
- t₁, t₁', t₂, t₂': maximal Tiefe
- T_{UR}: Profiltiefe
- S₈, S₁₄: Pfeil (Sichtrichtung)
- Z: zentraler Laufstreifenbereich
- Z₂: Detail
- α, β, γ, δ, ε, η₁: Winkel
- η2, θ, κ, λ, µ, π: Winkel

## Patentansprüche

1. Fahrzeugreifen mit einem Laufstreifen mit zumindest einer an zumindest einer Seite von einer Umfangsrille (3, 4) begrenzten Profilblockreihe (2') mit einer Reihenmittellinie (m_{BR}') und Profilblöcken (7'), welche durch in die Umfangsrille (3, 4) einmündende Querrillen (6') voneinander getrennt sind,
wobei jede Querrille (6') eine Breite mit einem an der breitesten Stelle vorliegenden, maximalen Wert (b₁ₘₐₓ') von 3,00 mm bis 8,00 mm und eine an der tiefsten Stelle vorliegende, maximale Tiefe (t₁') von 70% bis 100% der Profiltiefe (T_{UR}) sowie, in Draufsicht betrachtet, einen Hauptabschnitt (6₁') und einen an diesen anschließenden in die Umfangsrille (3, 4) einmündenden Randabschnitt (6₂') aufweist,
wobei der Hauptabschnitt (6₁') die Reihenmittellinie (m_{BR}') passiert, eine Breite (b₁') und einen auf der maximalen Tiefe (t₁') verlaufenden Rillengrund (9') aufweist, wobei der Randabschnitt (6₂') eine von der Breite (b₁') des Hauptabschnitts (6₁') abweichende Breite (b₂') aufweist und
wobei in der Querrille (6') ein in Draufsicht über den kompletten Randabschnitt (6₂') reichendes Rillenplateau (10') mit einer gegenüber der Laufstreifenperipherie in radialer Richtung abgesetzten Plateaudeckfläche (10a') und einem von dieser ausgehenden Plateaudurchgang (14') ausgebildet ist,
wobei der Plateaudurchgang (14') einen zwischen der Umfangsrille (4) und dem Hauptabschnitt (6₁') verlaufenden, das Rillenplateau (10') durchsetzenden, schmäler als der Randabschnitt (6₂') und der Hauptabschnitt (6₁') ausgeführten Einschnitt (14a') aufweist,
**dadurch gekennzeichnet,**
**dass** die Breite (b₁') des Hauptabschnitts (6₁') über dessen komplette in Draufsicht vorliegende Erstreckung größer ist als die Breite (b₂') des Randabschnitts (6₂'), wobei das Rillenplateau (10') in den Hauptabschnitt (6₁') hineinragt und in diesem über eine zum Rillengrund (9') abfallende Plateaurampenfläche (10b') ausläuft,
wobei die Plateaurampenfläche (10b'), in Draufsicht betrachtet, entlang der Rillenmittellinie (m_{QR}') langgezogen ist und, im in Draufsicht entlang der Rillenmittellinie (m_{QR}') ausgerichteten Schnitt betrachtet, relativ zur Laufstreifenperipherie eine größere Neigung aufweist als die Plateaudeckfläche (10a') und
wobei der Einschnitt (14a') des Plateaudurchgangs (14'), im in Draufsicht entlang der Rillenmittellinie (m_{QR}') ausgerichteten Schnitt betrachtet, einen an der Plateaurampenfläche (10b') keilförmig auslaufenden Einschnittaustritt (14a₂') aufweist.

2. Fahrzeugreifen nach Anspruch 1, **dadurch gekennzeichnet, dass** die Plateaudeckfläche (10a'), im in Draufsicht entlang der Rillenmittellinie (m_{QR}) ausgerichteten Schnitt betrachtet, parallel zur Laufstreifenperipherie verläuft.

3. Fahrzeugreifen nach Anspruch 1 oder 2, **dadurch gekennzeichnet, dass** die Plateaudeckfläche (10a') zum Niveau der Profiltiefe (T_{UR}) in radialer Richtung einen als kleinstmöglichen Abstand ermittelten Abstand (a_{PF}') von 3,00 mm bis 5,00 mm, insbesondere von 3,50 mm bis 4,50 mm, aufweist.

4. Fahrzeugreifen nach einem der Ansprüche 1 bis 3, **dadurch gekennzeichnet, dass** die Breite (b₂') des Randabschnitts (6₂') 40% bis 55% des maximalen Werts (b₁ₘₐₓ') der Breite (b₁') des Hauptabschnitts (6₁') beträgt.

5. Fahrzeugreifen nach einem der Ansprüche 1 bis 4, **dadurch gekennzeichnet, dass** die Plateaudeckfläche (10a') in den Hauptabschnitt (6₁') hineinverläuft.

6. Fahrzeugreifen nach einem der Ansprüche 1 bis 5, **dadurch gekennzeichnet, dass** der Plateaudurchgang (14') in radialer Richtung aus dem Einschnitt (14a') und einem von der Plateaudeckfläche (10a') in radialer Richtung beabstandeten, an den Einschnitt (14a') anschließenden und gemeinsam mit diesem zwischen der Umfangsrille (4) und dem Hauptabschnitt (6₁') verlaufenden, den Einschnitt (14a') im Querschnitt beidseitig überragenden Kanal (14b') gebildet ist.

7. Fahrzeugreifen nach Anspruch 6, **dadurch gekennzeichnet, dass** der Kanal (14b') einen Durchmesser (d_{K}') von 1,00 mm bis 2,00 mm, insbesondere von 1,30 mm bis 1,80 mm, aufweist.

8. Fahrzeugreifen nach einem der Ansprüche 1 bis 7, **dadurch gekennzeichnet, dass** der Einschnitt (14a') eine Breite (b_{E}') von 0,60 mm bis 0,90 mm, insbesondere von 0,70 mm bis 0,80 mm, aufweist.

9. Fahrzeugreifen nach einem der Ansprüche 1 bis 8, **dadurch gekennzeichnet, dass** die Plateaurampenfläche (10b'), im in Draufsicht entlang der Rillenmittellinie (m_{QR}) verlaufenden Schnitt betrachtet, zur radialen Richtung unter einem Winkel (π) von 55° bis 65° verläuft.

10. Fahrzeugreifen nach einem der Ansprüche 1 bis 9, **dadurch gekennzeichnet, dass** der Randabschnitt (6₂'), in Draufsicht betrachtet, eine auf die Rillenmittellinie (m_{QR}') bezogene, in die axiale Richtung projizierte Länge (c₂') von 15% bis 25% der auf die Rillenmittellinie (m_{QR}') bezogenen, in die axiale Richtung projizierten Länge (c_{QR}') der Querrille (6') aufweist.

11. Fahrzeugreifen nach einem der Ansprüche 1 bis 10, **dadurch gekennzeichnet, dass** die Querrille (6'), in Draufsicht betrachtet, aus dem Hauptabschnitt (6₁') und dem Randabschnitt (6₂') zusammengesetzt ist.

12. Fahrzeugreifen nach einem der Ansprüche 1 bis 11, **dadurch gekennzeichnet, dass** die Rillenmittellinie (m_{QR}') der Querrille (6') am gegenseitigen Anschluss des Hauptabschnitts (6₁') an den Randabschnitt (6₂') einen Knickpunkt (K') aufweist, wobei der Hauptabschnitt (6₁') mit dem Randabschnitt (6₂') einen auf die Rillenmittellinie (m_{QR}') bezogenen Winkel (λ) von 135° bis 165°, insbesondere von 150° bis 160°, einschließt.

13. Fahrzeugreifen nach einem der Ansprüche 1 bis 12, **dadurch gekennzeichnet, dass** der Hauptabschnitt (6₁'), in Draufsicht betrachtet, bezogen auf die Rillenmittellinie (m_{QR}') der Querrille (6') durchgehend gebogen verläuft und der Randabschnitt (6₂'), in Draufsicht betrachtet, bezogen auf die Rillenmittellinie (m_{QR}') der Querrille (6') gerade verläuft.

14. Fahrzeugreifen nach einem der Ansprüche 1 bis 13, **dadurch gekennzeichnet, dass** der Randabschnitt (6₂') in radialer Richtung eine maximale Tiefe (t₂') aufweist, welche höchstens der maximalen Tiefe (t₁') des Hauptabschnitts (6₁') entspricht und vorzugsweise 0,50 mm bis 2,00 mm kleiner ist als die maximale Tiefe (t₁') des Hauptabschnitts (6₁').

15. Fahrzeugreifen nach einem der Ansprüche 1 bis 14, **dadurch gekennzeichnet, dass** die Querrille (6'), in Draufsicht betrachtet und bezogen auf eine die Enden der Rillenmittellinie (m_{QR}') verbindende, gerade Hilfslinie (h_{QR}') - zur Umfangsrichtung unter einem Winkel (ε) von 35° bis 65°, insbesondere von 45° bis 55°, verläuft, wobei der Laufstreifen vorzugsweise laufrichtungsgebunden ausgeführt ist und die Querrille (6') - bezogen auf die Hilfslinie (h_{QR}') - derart relativ zur axialen Richtung geneigt ist, dass beim Abrollen des Reifens bei Vorwärtsfahrt (Pfeil R) das im Randabschnitt (6₂') liegende Ende der Hilfslinie (h_{QR}') vor dem anderen Ende der Hilfslinie (h_{QR}') in den Untergrund eintritt.
